# FASCICULE DE BREVET EUROPEEN

(11) **EP 4 478 885 B1**
(45) Date de publication et mention de la délivrance du brevet: **17.12.2025**
(21) Numéro de dépôt: 23706294.8
(22) Date de dépôt: 15.02.2023
(51) Int. Cl.: A01N 43/16, A01P 13/00

(54) **UTILISATION DE DÉRIVES CHROMÈNE OU CHROMANE EN TANT QU'AGENTS HERBICIDES**
VERWENDUNG VON CHRMOEN- ODER CHROMANDERIVATEN ALS HERBIZIDE
USE OF CHROMENE OR CHROMANE DERIVATIVES AS HERBICIDES

(30) Priorité: 17.02.2022 FR 2201378
(43) Date de publication de la demande: 25.12.2024
(73) Titulaire: Ecole Polytechnique, 91128 Palaiseau Cedex (FR); Centre National de la Recherche Scientifique, 75016 Paris (FR); Sorbonne Université, 75006 Paris (FR); École Nationale Supérieure de Techniques Avancées, 91762 Palaiseau Cédex (FR)
(72) Inventeur: NAY, Bastien, 75014 PARIS (FR); BAUDOUIN, Emmanuel Alain Simon, 94230 THIAIS (FR); WALTERS, Bruce, 91400 ORSAY (FR); THUILLIER, Simon Michel, 75014 PARIS (FR)
(74) Mandataire: IPAZ
(86) Numéro de dépôt international: PCT/EP2023/053769
(87) Numéro de publication internationale: WO 2023/156464

(56) Documents cités:
- EP-A2- 0 144 052
- EP-A2- 0 400 403
- CA-A1- 2 249 523
- CN-A- 109 400 568
- CN-A- 110 563 683
- DE-A1- 2 535 338
- GB-A- 1 419 788
- MARCO MASI ET AL: "Radicinin, a Fungal Phytotoxin as a Target-Specific Bioherbicide for Invasive Buffelgrass (Cenchrus ciliaris) Control", MOLECULES, vol. 24, no. 6, 19 March 2019 (2019-03-19), DE, pages 1086, XP055666020, ISSN: 1433-1373, DOI: 10.3390/molecules24061086
- FLORES-RESÉNDIZ MÓNICA ET AL: "Mitochondrial damage produced by phytotoxic chromenone and chromanone derivatives from endophytic fungus Daldinia eschscholtzii strain GsE13", APPLIED MICROBIOLOGY AND BIOTECHNOLOGY, SPRINGER BERLIN HEIDELBERG, BERLIN/HEIDELBERG, vol. 105, no. 10, 1 May 2021 (2021-05-01), pages 4225 - 4239, XP037482649, ISSN: 0175-7598, [retrieved on 20210510], DOI: 10.1007/S00253-021-11318-7

## Description

La présente invention s'applique au domaine des herbicides utiles pour lutter contre la prolifération de plantes indésirables. En particulier, l'invention est relative à l'utilisation d'au moins un composé dérivé du chromène ou du chromane en tant qu'agent herbicide, à une composition phytotoxique comprenant ledit composé, ainsi qu'à un procédé de traitement et/ou de contrôle des plantes mettant en œuvre un tel composé.

Les mauvaises herbes sont considérées comme l'un des fléaux qui causent le plus de pertes dans la production agricole mondiale, et qui est responsable de plus de 30% de la baisse des rendements et de la qualité des récoltes. Elles apparaissent tout au long de la période de croissance des cultures et sont particulièrement nuisibles au moment des semis et pendant la récolte. Au cours des 60 dernières années, le contrôle des mauvaises herbes a été exercé presque exclusivement par l'application d'herbicides d'origine non naturelle, contre lesquels ces mauvaises herbes ont développé une résistance croissante. Par exemple, plus de 50 espèces de « mauvaises herbes » ayant une résistance avérée au glyphosate, un herbicide systémique à large spectre très utilisé pour des usages agricoles et non agricoles, sont actuellement confirmées selon la base de données internationale « *Herbicide-Resistant Weed Database* », appelées les « super mauvaises herbes ».

Des équipes de recherche se sont par conséquent intéressées à des solutions et alternatives durables, notamment à partir de substances naturelles.

Parmi les nouvelles molécules de synthèse s'inspirant de substances naturelles, on peut citer les tricétones (mésotrione, topramézone, tembotrione) basées sur la leptospermone isolée de la plante *Callistemon citrinus* ou rince-bouteille, qui inhiberaient l'enzyme p-hydroxyphenylpyruvate dioxygénase ; la cinméthyline basée sur l'isocinéole, un terpène trouvé dans la cardamome ou certaines variétés de poivre, qui inhiberait la tyrosine aminotransférase ; et l'endothall basé sur la cantharidine, une puissante toxine de défense produite par des insectes, qui inhiberait des protéine-phosphatases chez les plantes. En particulier, la leptospermone a été découverte à la fin des années 1970 après avoir observé que le rince-bouteille inhibait la croissance d'autres plantes dans son environnement, signalant la présence d'une substance aux propriétés allélopathiques.

La littérature a également proposé des substances naturelles telles que le glufosinate, également connu sous le nom de phosphinothricine et souvent vendu sous forme de sel d'ammonium, issu de la dégradation du bialaphos (ou bilanaphos), un tripeptide isolé de bactéries. Cependant, celui-ci a été retiré du marché en 2017 en raison de sa classification comme produit chimique reprotoxique possible. D'autres substances naturelles telles que des acides gras ont été commercialisées comme biopesticides (e.g. acide pélargonique commercialisé sous la référence agent du Beloukha^{®} ou acide acétique) agissant comme défoliants superficiels. Ils ont par conséquent une activité limitée dans le temps.

D'autres équipes de recherche se sont concentrées sur des molécules de synthèse à base de chromène ou chromane. En particulier, US5053071 décrit des herbicides à large spectre comprenant un motif chromane répondant à l'une des formules suivantes :

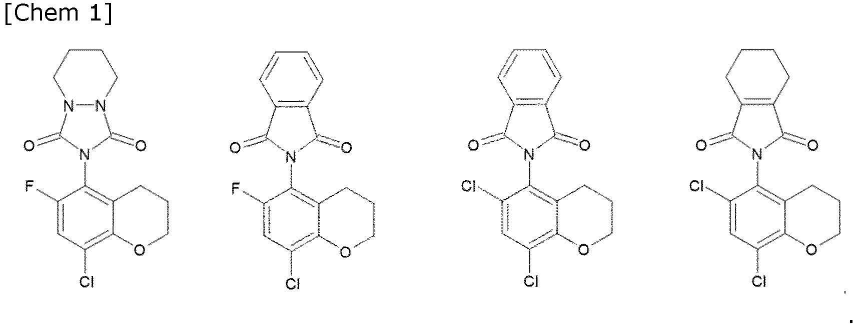

Certains composés de US5053071 comprennent des stéréoisomères, qui peuvent poser des problèmes en termes de stratégie de synthèse, de purification, et de caractérisation d'activité biologique. De plus, la voie de synthèse à partir d'un noyau phénolique fait intervenir de nombreuses étapes utilisant des conditions difficiles à mettre en œuvre à grande échelle (allylation d'un phénol complexe, réarrangement de Claisen à température élevée, hydroboration, cyclisation, puis fonctionnalisation).

La demande internationale WO2019/005484 décrit des herbicides comprenant un motif chromène répondant à la formule suivante :

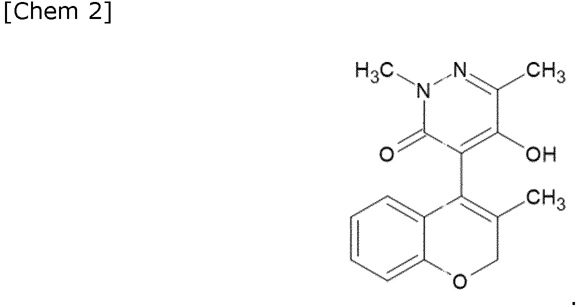

Cependant, certains composés de WO2019/005484 possèdent des centres asymétriques, conduisant à des énantiomères, diastéréoisomères et/ou atropoisomères, qui peuvent poser des problèmes en termes de stratégie de synthèse, de purification, et surtout de caractérisation d'activité biologique. Quant à leurs voies de synthèse, elles ne sont pas précisément décrites.

Il existe par conséquent un besoin en nouveaux agents herbicides efficaces à l'égard des plantes indésirables, faciles à préparer, et dont les effets secondaires à l'égard de l'environnement sont en revanche significativement réduits par opposition à ceux précités.

Ainsi, le but de la présente invention est de pallier les inconvénients de l'art antérieur précité et de fournir un agent herbicide présentant de bonnes performances en termes d'activité herbicide et/ou de sélectivité, facile à préparer, et ayant une toxicité diminuée.

Le but de l'invention est atteint par les composés dérivés chromène et chromane qui vont être décrits ci-après.

La présente invention a ainsi pour premier objet l'utilisation d'au moins un composé choisi parmi un composé répondant à la formule (I), un de ses isomères, un de leurs sels organiques et inorganiques, en tant qu'agent herbicide,
ladite formule (I) ayant la structure suivante : 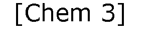 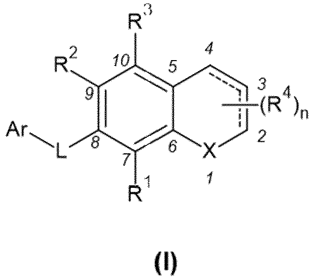 dans laquelle :
* R¹, R², et R³ représentent, indépendamment les uns des autres, un atome d'hydrogène, un atome d'halogène, un radical alkyle ou cycloalkyle en C₁ à C₅, ou un groupe choisi parmi -OH, -COOH, -COOR⁵, -OR⁵ et -SO₂R⁵, avec R⁵ étant un radical alkyle ou cycloalkyle en C₁ à C₅, ledit radical alkyle ou cycloalkyle en C₁ à C₅ pouvant être substitué par un ou plusieurs substituants choisis parmi un atome d'halogène et un groupe hydroxyle,
* X fait partie d'un hétérocycle à six chainons et représente un atome d'oxygène, un atome de soufre, un groupe divalent SO, un groupe divalent SO₂, et un groupe divalent NR⁶, avec R⁶ étant un atome d'hydrogène, un radical alkyle ou cycloalkyle en C₁ à Cs, ou un radical aryle ou hétéroaryle en C₂ à Cs,
* le symbole - - - - - représente une liaison simple ou une liaison double en position 2,3 ou 3,4 de l'hétérocycle à six chaînons portant l'hétéroatome ou le groupe divalent X, de sorte que ledit hétérocycle à six chaînons comprend soit deux simples liaisons en positions 2,3 et 3,4, soit une simple liaison en position 2,3 et une double liaison en position 3,4, soit une double liaison en position 2,3 et une simple liaison en position 3,4,
* L représente un bras de liaison choisi parmi les chaines alkylènes linéaires et ramifiées ayant au moins un atome de carbone, lesdites chaines alkylènes linéaires ou ramifiées pouvant être interrompues et/ou terminées par un ou plusieurs hétéroatomes choisis parmi un atome d'oxygène, de soufre, et d'azote substitué,
* Ar représente un groupe aromatique choisi parmi les groupes phényle, naphtyle, furyle, thiophényle, pyrrolyle, pyridinyle, indolyle, isoindolyle, benzofuryle, benzothiophényle, quinolyle, isoquinolyle, imidazolyle, oxazolyle, thiazolyle, pyrimidyle, pyridazyle, pyrazyle, pyrrazolyle, et triazolyle, ledit groupe aromatique pouvant être substitué par un ou plusieurs substituants choisis parmi un atome d'halogène, un radical alkyle ou cycloalkyle en C₁ à C₅, un groupe -OH, un groupe -COOH, un groupe -COOR⁷, un groupe -OR⁷, et un groupe -SO₂R⁷, avec R⁷ étant un radical alkyle ou cycloalkyle en C₁ à Cs, ledit radical alkyle ou cycloalkyle en C₁ à C₅ pouvant être substitué par un ou plusieurs substituants choisis parmi un atome d'halogène et un groupe hydroxyle,
* n est un nombre entier allant de 4 à 6 et représente le nombre de substituants R⁴, identiques ou différents, présents sur l'hétérocycle à six chaînons, et
* R⁴ représente un atome d'hydrogène, un atome d'halogène, un radical alkyle ou cycloalkyle en C₁ à C₅, ou un groupe choisi parmi -OH, -COOH, -COOR⁸, -OR⁸ et - SO₂R⁸, avec R⁸ étant un radical alkyle ou cycloalkyle en C₁ à Cs, ledit radical alkyle ou cycloalkyle en C₁ à C₅ pouvant être substitué par un ou plusieurs substituants choisis parmi un atome d'halogène et un groupe hydroxyle.

Les composés (I) de l'invention sont des dérivés à base de chromène (2H-chromène ou 4H-chromène) ou de chromane (3,4-Dihydro-2H-1-benzopyrane) incluant des composés existants naturellement dans les Hépatiques, des mousses végétales présentes notamment dans les forêts et les zones humides, et des composés s'inspirant de tels composés existants naturellement dans les Hépatiques. Les inventeurs ont ainsi découvert que de tels composés selon le premier objet de l'invention présentent une activité herbicide significative. Par ailleurs, ces composés sont faciles à préparer et certains peuvent être extraits directement du milieu naturel.

Au sens de la présente invention, on entend par « agent herbicide » un produit chimique se présentant sous la forme d'une substance active ou d'une composition phytosanitaire efficace pour lutter contre la prolifération des plantes indésirables.

Un agent herbicide peut en particulier être dit total s'il détruit toutes sortes de plantes ou dit sélectif s'il tue uniquement une ou plusieurs catégories de plantes indésirables. De même, il peut être qualifié à travers son mode d'action, par exemple à pénétration racinaire, systémique ou encore de post-levée.

Un « agent herbicide à pénétration racinaire » est un agent herbicide qui agit en étant absorbé par les racines de la plante, alors qu'un « agent herbicide foliaire » est absorbé par la plante au niveau des feuilles.

Un « agent herbicide systémique » agit en se diffusant dans l'ensemble de la plante par l'intermédiaire de la sève, par opposition à un « agent herbicide de contact » qui détruit uniquement les surfaces sur lesquelles il est appliqué et est donc en contact.

Enfin, un « agent herbicide de post-levée » agit sur le végétal après l'émergence des premières plantules, tandis qu'un « agent herbicide de prélevée » permet d'agir dès leur germination.

Dans la présente invention, en entend par « isomères », les isomères structurels stériques et optiques, lesdits isomères présentant la même masse molaire que le composé de formule (I), et les variations structurelles étant limitées à :
- la position de X sur l'hétérocycle à six chaînons,
- la position du carbone tétraédrique lorsque l'hétérocycle à six chaînons comprend une double liaison,
- la position des groupes R¹, R², R³, et L-Ar sur le groupe phényle, et
- la position des n groupes R⁴ sur l'hétérocycle à six chaînons.

À titre d'exemples de sels inorganiques du composé de formule (I) et de ses isomères, on peut citer les sels alcalins et alcalinoterreux du composé de formule (I) et de ses isomères.

À titre d'exemples de sels organiques du composé de formule (I) et de ses isomères, on peut citer les sels d'ammonium du composé de formule (I) et de ses isomères.

Dans la présente invention le radical alkyle ou cycloalkyle en C₁ à C₅ peut être linéaire ou ramifié, et il est de préférence linéaire.

Au sens de la présente invention, un halogène est choisi parmi F, Cl, Br et I, et de façon particulièrement préférée parmi F et Cl.

### Définition de X

Le radical alkyle ou cycloalkyle en tant que groupe R⁶ est de préférence un radical alkyle, de façon particulièrement préférée un radical alkyle linéaire, et de façon plus particulièrement préférée un radical alkyle linéaire en C₁ à C₃.

Le radical aryle en tant que groupe R⁶ est de préférence un radical aryle en C₅ à C₆, et de façon particulièrement préférée un radical phényle.

Le radical hétéroaryle en tant que groupe R⁶ peut être un radical indole ou triazole.

R⁶ en tant que radical aryle ou hétéroaryle en C₂ à C₈ est de préférence un radical aryle en C₅ à C₆.

Le groupe R⁶ est de préférence un atome d'hydrogène ou un radical alkyle ou cycloalkyle.

Selon une forme de réalisation particulièrement préférée de l'invention, X représente un atome d'oxygène.

### Définition de R¹, R², et R³ et R⁵

Le radical alkyle ou cycloalkyle en tant que groupe R¹, R², ou R³ est de préférence un radical alkyle, de façon particulièrement préférée un radical alkyle linéaire, et de façon plus particulièrement préférée un radical alkyle linéaire en C₁ à C₃.

Le radical alkyle ou cycloalkyle en tant que groupe R⁵ est de préférence un radical alkyle, de façon particulièrement préférée un radical alkyle linéaire, et de façon plus particulièrement préférée un radical alkyle linéaire en C₁ à C₃.

Ledit radical alkyle ou cycloalkyle en tant que groupe R¹, R², R³, ou R⁵ peut être substitué par un ou plusieurs substituants choisis parmi un atome d'halogène et un groupe hydroxyle.

Selon un mode réalisation particulièrement préférée de l'invention, au moins l'un des groupes R¹, R², et R³ représente un groupe -OH, et de manière avantageuse le groupe R³ représente un groupe -OH. Cela permet d'obtenir plus facilement les composés de l'invention et d'augmenter l'activité herbicide.

Dans ce mode de réalisation, les deux autres groupes R¹ et R², ou R¹ et R³, ou R² et R³, et de manière avantageuse les deux autres groupes R¹ et R², représentent, indépendamment l'un de l'autre, un atome d'hydrogène, un groupe -COOH, ou un groupe -COOR⁵, avec R⁵ étant un radical alkyle en C₁ à Cs, et de préférence un radical méthyle.

De façon particulièrement préférée, toujours dans ce mode de réalisation, le groupe R¹ représente un atome d'hydrogène ou un groupe -COOH, et de façon plus particulièrement préférée un atome d'hydrogène.

De façon particulièrement préférée, toujours dans ce mode de réalisation, le groupe R² représente un atome d'hydrogène, un groupe COOH, ou un groupe -COOR⁵, avec R⁵ étant un radical alkyle en C₁ à Cs, et de préférence un radical méthyle, et de façon plus particulièrement préférée un atome d'hydrogène ou un groupe -COOH.

### L'hétérocycle à six chaînons

Ledit hétérocycle à six chaînons portant l'hétéroatome ou le groupe divalent X comprend de préférence soit deux simples liaisons en positions 2,3 et 3,4, soit une simple liaison en position 2,3 et une double liaison en position 3,4, et de façon particulièrement préférée une simple liaison en position 2,3 et une double liaison en position 3,4.

### Définition de L

L représente de préférence une chaine alkylène linéaire ou ramifiée ayant de 1 à 6 atomes de carbone, de façon particulièrement préférée une chaine alkylène linéaire ayant de 2 à 3 atomes de carbone, et de façon plus particulièrement préférée une chaîne alkylène linéaire ayant 2 atomes de carbone.

La chaine alkylène linéaire ou ramifiée en tant que bras de liaison L peut être interrompue et/ou terminée par un ou plusieurs hétéroatomes choisis parmi un atome d'oxygène, de soufre, et d'azote substitué, et de préférence par un ou plusieurs atomes d'oxygène.

L'azote peut être substitué par un groupe alkyle en C₁ à Cs, de préférence en C₁ à C₃, ledit radical alkyle étant de préférence un radical alkyle linéaire.

### Définition de Ar

Le radical alkyle ou cycloalkyle en tant que substituant du groupe Ar est de préférence un radical alkyle, de façon particulièrement préférée un radical alkyle linéaire, et de façon plus particulièrement préférée un radical alkyle linéaire en C₁ à C₃.

Le radical alkyle ou cycloalkyle en tant que groupe R⁷ est de préférence un radical alkyle, de façon particulièrement préférée un radical alkyle linéaire, et de façon plus particulièrement préférée un radical alkyle linéaire en C₁ à C₃.

Ledit radical alkyle ou cycloalkyle en tant que substituant du groupe Ar ou groupe R⁷ peut être substitué par un ou plusieurs substituants choisis parmi un atome d'halogène et un groupe hydroxyle.

Ar représente de préférence un groupe phényle, ledit groupe phényle pouvant être substitué par un ou plusieurs substituants tels que définis dans l'invention pour le groupe aromatique Ar.

Parmi les substituants du groupe aromatique Ar, le groupe -OH est préféré.

### Définition de n et R⁴

L'hétérocycle à six chaînons portant le groupe divalent ou hétéroatome X comprend au moins 4 substituants R⁴ et au plus 6 substituants R⁴ selon la présence ou absence d'une double liaison au sein dudit hétérocycle.

Le radical alkyle ou cycloalkyle en tant que groupe R⁴ est de préférence un radical alkyle, de façon particulièrement préférée un radical alkyle linéaire, et de façon plus particulièrement préférée un radical alkyle linéaire en C₁ à C₃.

Le radical alkyle ou cycloalkyle en tant que groupe R⁸ est de préférence un radical alkyle, de façon particulièrement préférée un radical alkyle linéaire, et de façon plus particulièrement préférée un radical alkyle linéaire en C₁ à C₃.

Ledit radical alkyle ou cycloalkyle en tant que groupe R⁴ ou R⁸ peut être substitué par un ou plusieurs substituants choisis parmi un atome d'halogène et un groupe hydroxyle.

Selon une première variante, l'hétérocycle comprend une double liaison, le composé répond alors à la formule (Ia) ou (Ib) suivante : 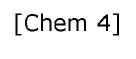 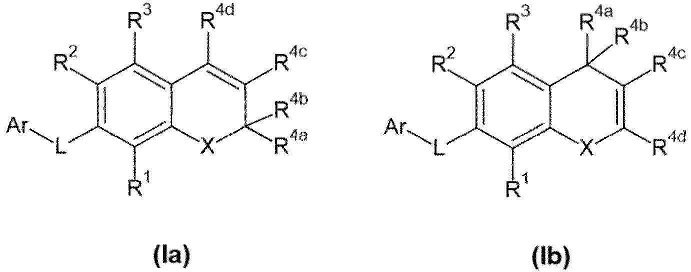 dans laquelle :
* Ar, L, R¹, R², R³, et X sont tels que définis dans l'invention, et
* R^{4a}, R^{4b}, R^{4c}, et R^{4d}, identiques ou différents, représentent un atome d'hydrogène ou un radical alkyle ou cycloalkyle en C₁ à Cs, ledit radical alkyle ou cycloalkyle en C₁ à C₅ pouvant être substitué par un ou plusieurs atomes d'halogène.

Selon une forme de réalisation particulièrement préférée de cette première variante, R^{4a} représente un radical alkyle en C₁ à C₅ éventuellement substitué par un ou plusieurs atomes d'halogène, R^{4b} représente un atome d'hydrogène ou un radical alkyle en C₁ à C₅ éventuellement substitué par un ou plusieurs atomes d'halogène, et R^{4c} et R^{4d} représentent un atome d'hydrogène.

R^{4a} représente avantageusement un radical alkyle en C₁ à C₃ éventuellement substitué par un ou plusieurs atomes d'halogène, et de manière encore plus avantageuse un radical méthyle. Cela permet ainsi d'améliorer l'efficacité herbicide.

Lorsque R^{4b} représente un radical alkyle en C₁ à C₅ éventuellement substitué par un ou plusieurs atomes d'halogène, il est de préférence un radical alkyle en C₁ à C₃ éventuellement substitué par un ou plusieurs atomes d'halogène, et de manière encore plus préférée un radical méthyle.

Selon une deuxième variante, l'hétérocycle ne comprend pas de double liaison, le composé répond alors à la formule (Ic) suivante : 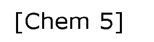 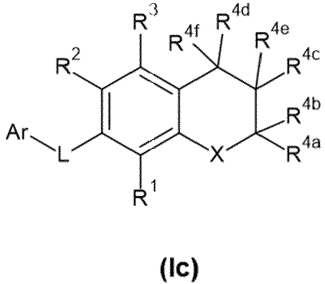 dans laquelle :
* Ar, L, R¹, R², R³, et X sont tels que définis dans l'invention, et
* R^{4a}, R^{4b}, R^{4c}, R^{4d}, R^{4e}, et R^{4f}, identiques ou différents, représentent un atome d'hydrogène ou un radical alkyle ou cycloalkyle en C₁ à Cs, ledit radical alkyle ou cycloalkyle en C₁ à C₅ pouvant être substitué par un ou plusieurs atomes d'halogène.

Selon une forme de réalisation particulièrement préférée de cette deuxième variante, R^{4a} et R^{4b} représentent un radical méthyle, et R^{4c}, R^{4d}, R^{4e}, et R^{4f} représentent un atome d'hydrogène.

Selon un mode de réalisation préféré de l'invention, le composé de formule (I) est choisi parmi les composés suivants :

**[Tableau 1]**

| Nom | Formule développée |
|---|---|
| Composé Ia1 | 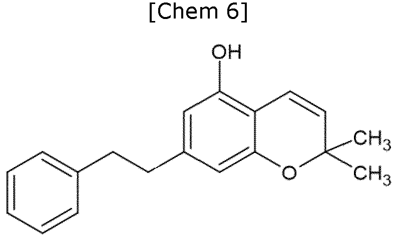 |
| Composé Ia2 | 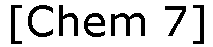 |
| | 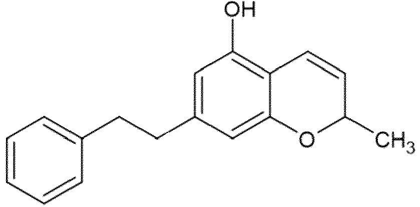 |
| Composé Ia3 | 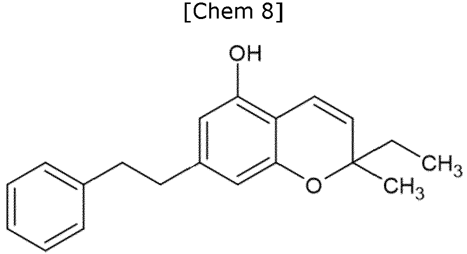 |
| Composé Ic1 | 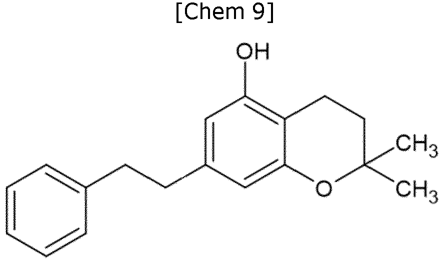 |

**De** par leur activité biologique herbicide, les composés tels que définis dans le premier objet de l'invention sont utiles dans les domaines de l'agriculture, du jardinage, et des transports, notamment pour désherber les tarmacs ou les voies ferrées.

Le composé tel que défini dans le premier objet de l'invention peut être mis en œuvre sous une forme isolée ou non isolée, et/ou naturelle ou synthétique.

Selon un mode de réalisation, le composé tel que défini dans le premier objet de l'invention est mis en œuvre sous une forme isolée.

Selon l'invention, le terme « forme isolée » qualifie le fait que le composé tel que défini dans le premier objet de l'invention est mis en œuvre sous une forme pure c'est-à-dire distincte d'un mélange avec d'autres composés, qui peut être par exemple un extrait végétal le contenant en association avec d'autres substances.

Ainsi, ces composés tels que définis dans le premier objet de l'invention peuvent être isolés d'extraits végétaux mais peuvent également être préparés par voie synthétique notamment comme illustré dans les exemples qui suivent.

Selon un autre mode de réalisation, le composé tel que défini dans le premier objet de l'invention est mis en œuvre sous la forme d'un extrait naturel, notamment d'origine végétale, le contenant.

L'origine naturelle permet d'envisager un impact environnemental réduit.

En particulier, certains composés tels que définis dans le premier objet de l'invention peuvent être mis en œuvre sous la forme d'un extrait de plantes hépatiques en contenant, notamment et de façon non limitative : *Radula laxiramea, Radula variabilis , Radula complanata, Radula buccinifera, Radula japonica, Radula oyamensis, Radula tokiensis, Radula perrottetii, Radula kojana, Radula javanica* qui peuvent contenir en général un mélange de ces composés tels que définis dans le premier objet de l'invention et d'autres composés apparentés. La mise en œuvre peut directement faire intervenir la plante, ou tout autre agent biologique permettant la production des composés de l'invention, leur séchage et leur réduction en poudre.

Par exemple, le composé (Ia1) a été isolé de la plante *Radula kojana* [Asakawa et al., Phytochemistry, 1991, 30, 219-234].

L'extrait peut notamment être obtenu par extraction mécanique, par exemple par pressage, ou par extraction chimique, notamment par lixiviation, macération, infusion. Le cas échéant, l'extraction peut être suivie d'une étape de purification par chromatographie ou cristallisation.

Selon encore un autre mode de réalisation, le composé tel que défini dans le premier objet de l'invention peut être généré *in situ* ou juste avant emploi à partir d'un précurseur, par exemple par hydrolyse, notamment d'un ester.

Bien entendu, les différents composés tels que définis dans le premier objet de l'invention peuvent être utilisés en mélange à titre de substances actives herbicides selon l'invention.

Selon l'invention, un « agent herbicide » correspond à tout composé ou toute composition ayant la propriété de tuer des végétaux dits indésirables, notamment des plantes.

Ces végétaux dits indésirables sont généralement des mousses, des algues, ou des mauvaises herbes, et de façon non limitative notamment l'anthémis, les amarantes, les arabettes, les armoises, les arroches, le bleuet, la bourse-à-pasteur, les bromes, les cardamines, le chardon, les chénopodes, le chiendent rampant, le coquelicot, le datura stramoine, l'euphorbe, les fumeterres, le gaillet gratteron, le galinsoga, les géraniums, le grémil des champs, les laiterons, les lamiers, les linaires, les liserons, les mourons, la moutarde des champs, le myosotis, les orties, l'oxalis, le passerage, la pensée des champs, le pissenlit, les plantains, la ravenelle, le ray-grass, la renoncule, les renouées, le séneçon, la spergule des champs, les véroniques et la vesce cultivée.

Par exemple, des végétaux dits indésirables peuvent être ceux listés dans HYPPA (HYpermédia pour la Protection des Plantes - Adventices), une base encyclopédique développée par l'INRAe Dijon, comportant des données sur 580 « mauvaises herbes » des cultures d'Europe occidentale.

Comme il ressort des exemples ci-après, les composés tels que définis dans le premier objet de l'invention sont tout particulièrement avantageux à titre d'agents herbicides de post-levée.

Ils sont notamment avantageux d'une part comme agents herbicides à pénétration racinaire et d'autre part comme agents herbicides systémiques.

En particulier, les composés tels que définis dans le premier objet de l'invention sont utilisés à titre d'agent herbicide sur des végétaux au stade de développement de la plantule, qui est une jeune plante germée ne comportant que quelques feuilles.

Les composés tels que définis dans le premier objet de l'invention sont employés sous une formulation propice à leur application au niveau de la zone à traiter.

D'une manière générale, cette formulation dédiée à l'application est une formulation liquide et généralement aqueuse.

Cette formulation liquide peut être procurée en tant que telle à l'utilisateur, c'est-à-dire prête à l'emploi.

Il peut également s'agir d'une formulation liquide concentrée devant être diluée par l'utilisateur juste avant emploi.

Il peut également s'agir d'une formulation sous forme solide, de type granules par exemple, à appliquer en tant que telle par l'utilisateur ou devant être dispersée en milieu aqueux avant emploi.

D'une manière générale, il est privilégié une application sous une forme diluée, notamment en milieu aqueux.

Les composés tels que définis dans le premier objet de l'invention peuvent être mis en œuvre à une concentration allant de 1 µg/mL à 200 µg/mL, de préférence de 5 µg/mL à 150 µg/mL, et encore plus préférentiellement de 10 µg/mL à 100 µg/mL en composé(s) tel(s) que défini(s) dans le premier objet de l'invention.

Bien entendu, cette concentration efficace est susceptible de varier en fonction de la nature chimique des composés tels que définis dans le premier objet de l'invention, du mode de formulation, ainsi que de la variété et du stade de développement des végétaux indésirables à traiter.

Il est également avantageux que la formulation soit propice à être pulvérisée.

Lorsque les composés selon l'invention sont représentés par la formule (Ia) de l'invention avec R³ = OH, X = O, R^{4c} = H, et R^{4d} = H (composés dénommés ci-après (Ia')), ils peuvent être préparés par réaction de condensation d'un aldéhyde α, β-insaturé de formule (II) avec un diphénol de formule (III) selon l'étape illustrée dans le schéma suivant : 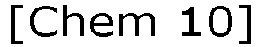 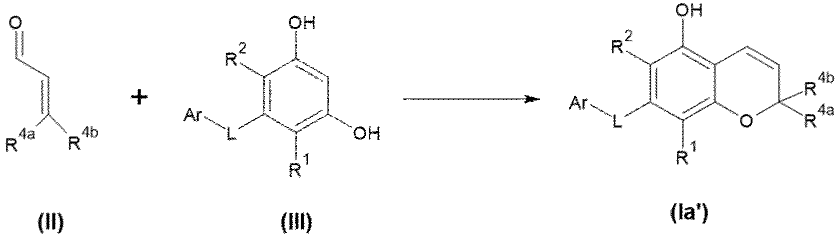 en présence d'un catalyseur acide choisi parmi le diacétate d'éthylène de diammonium (EDDA), les acides de Lewis comme Yb(OTf)₃, ZnCl₂, et les acides de Bronsted comme NH₄OAc, TFA, ou AcOH ; d'un solvant apolaire aprotique ou d'un solvant acide, dans un réacteur fermé (e.g. tube scellé), à reflux, et sous atmosphère inerte.

Le solvant apolaire aprotique peut être le toluène, le xylène, le benzène, ou le dichlorométhane.

Le solvant acide peut être l'acide acétique.

L'aldéhyde de formule (II) notamment lorsqu'il n'est pas disponible commercialement, peut être obtenu selon les trois étapes illustrées dans le schéma suivant : 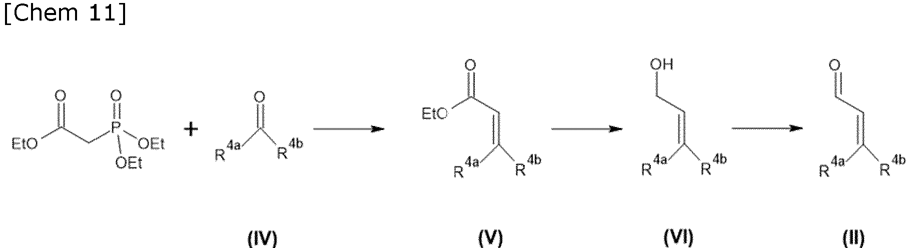 la première étape comprenant la réaction du phosphonoacétate de triéthyle avec une cétone de formule (IV) en présence d'une base forte telle que NaH, du tert-butylate de potassium ou du méthylate de sodium, et d'un solvant polaire aprotique tel que le tétrahydrofurane, le méthyltétrahydrofurane, ou le toluène, pour former le composé (V) ;
la deuxième étape comprenant la réduction sous atmosphère inerte de la fonction ester du composé (V) en fonction alcool en présence d'un réducteur tel que l'hydrure de diisobutylaluminium (DIBALH), l'hydrure de lithium et d'aluminium, ou le borohydrure de lithium, pour former le composé (VI) ; et la troisième étape comprenant l'oxydation sous atmosphère inerte de la fonction alcool du composé (VI) en fonction aldéhyde en présence d'un oxydant tel que MnO₂, NaOCl en présence de TEMPO, ou DMSO en présence de chlorure d'oxalyle ou d'un autre agent électrophile, pour former le composé (II).

L'invention a pour deuxième objet une composition phytotoxique comprenant, à titre de substance active herbicide, au moins un composé tel que défini dans le premier objet de l'invention, en combinaison avec un ou plusieurs additifs de formulation permettant d'améliorer la solubilité dans l'eau et/ou la pénétration dans les tissus végétaux tels que par exemple des tensioactifs anioniques, cationiques, amphotères, ou non ioniques.

La composition phytotoxique peut comprendre en outre un ou plusieurs autres actifs choisi(s) parmi les fertilisants, les régulateurs de croissance, et les agents herbicides annexes.

L'expression « herbicide annexe » selon l'invention fait référence à un herbicide différent d'un composé tel que défini dans le premier objet de l'invention.

Il peut être en effet intéressant d'associer un composé tel que défini dans le premier objet de l'invention à un herbicide annexe dont l'efficacité peut être complémentaire de celle des composés tels que définis dans le premier objet de l'invention. Toutefois, cet herbicide annexe est de préférence un composé sélectionné pour avoir un impact moindre sur l'environnement.

Les herbicides annexes peuvent être choisis parmi le nonanoate d'ammonium, l'acide nonanoïque (= acide pélargonique), les acides gras de longueur de chaîne intermédiaire (i.e. en C₈-C₁₂), et leurs sels, les dérivés de l'urée, le borax, le sulfate de cuivre, les acides carboxyliques (notamment l'acide acétique) et leurs sels, les composés azotés, les sels de calcium, et un de leurs mélanges.

Le fertilisant est de préférence un fertilisant azoté, qui peut être choisi parmi l'urée ; les sels d'ammonium ; notamment le chlorure d'ammonium, le nitrate d'ammonium ou le sulfate d'ammonium ; le phosphate d'ammonium et de potassium ; la poudre de cuir ; la poudre d'os, la poudre de plante ; et un de leurs mélanges.

Les régulateurs de croissance peuvent être choisis parmi l'hydrazide maléique, le chloroméquat-chlorure (par exemple le Cyclocel^{®}), les dérivés d'auxine, les régulateurs de croissance d'origine naturelle, et un de leurs mélanges.

Avantageusement, les régulateurs de croissance d'origine naturelle sont l'acide salicylique, les sels d'acide salicylique comme l'ammonium salicylate, les jasmonates, les auxines, les gibbérellines, les cytokinines, l'acide lunularique, l'acide abscissique, ou un de leurs mélanges.

Une composition selon l'invention peut également contenir d'autres additifs annexes plus conventionnels comme les tensioactifs, les agents antimoussants, les agents désintégrants, les agents stabilisants, les agents humidifiants, les épaississants ou les régulateurs de pH.

Le choix de ces additifs est le plus souvent réalisé au regard de la forme considérée pour la composition.

La composition phytotoxique peut comprendre ledit composé (I) à l'état pur ou sous la forme d'un extrait végétal ou de poudre végétale le contenant.

La composition phytotoxique selon l'invention peut se présenter sous la forme d'une composition solide, notamment sous forme de poudre ou de granules notamment propice à une dilution aqueuse. La composition solide peut également être dispersée directement sur la zone à désherber et solubilisée par humidification.

Une composition phytotoxique selon l'invention peut également se présenter sous la forme d'une composition liquide, notamment sous forme concentrée ou prête à l'emploi, notamment en solution ou en émulsion. De même, la composition liquide sous forme concentrée peut être diluée avant utilisation en ajoutant des adjuvants le cas échéant.

L'invention a pour troisième objet un procédé pour contrôler le développement et/ou traiter des plantes indésirables en surface d'une zone cible comprenant la mise en contact de la zone cible avec une quantité efficace d'un composé tel que défini dans le premier objet de l'invention, ou d'au moins une composition phytotoxique telle que définie dans le deuxième objet de l'invention.

De préférence, le composé tel que défini dans le premier objet de l'invention est apporté à la plante *via* le substrat de culture.

Ce substrat de culture peut être le sol mais également les milieux de cultures considérés pour les cultures en hydroponie.

Avantageusement, le composé est appliqué directement au contact du substrat de culture en surface duquel se développent les plantes à traiter.

Avantageusement, la mise en contact a lieu par pulvérisation d'au moins un composé tel que défini dans le premier objet de l'invention ou d'au moins une composition telle que définie dans le deuxième objet de l'invention.

Grâce au composé tel que défini dans le premier objet de l'invention, à la composition phytotoxique telle que définie dans le deuxième objet de l'invention, ou au procédé tel que défini dans le troisième objet de l'invention, la plante indésirable est tuée en moins de 96 h, de préférence en moins de 48 h, et encore plus préférentiellement en moins de 24 h après l'application.

D'autres caractéristiques, variantes et avantages de l'utilisation, de la composition phytotoxique, ou du procédé selon l'invention ressortiront mieux à la lecture des exemples de réalisation qui vont suivre, donnés à titre illustratif et non limitatif de l'invention.

### EXEMPLES

Le toluène, l'acétonitrile, et le benzène ont été distillés sur hydrure de calcium avant utilisation et, si nécessaire, dégazés en faisant barboter de l'azote gazeux.

Les chromatographies analytiques sur couche mince (CCM) ont été réalisées sur des plaques de gel de silice sur aluminium (gel de silice 60, F254, Merck) et visualisée par exposition à la lumière ultraviolette et/ou exposition à une solution basique de permanganate de potassium ou une solution de coloration au p-anisaldéhyde suivie d'un chauffage.

La chromatographie sur colonne flash a été réalisée sur silice 60 (40-63 µm).

Les spectres de résonance magnétique nucléaire (RMN ¹H et RMN ¹³C) ont été enregistrés à 25°C avec un spectromètre Bruker Avance 400 (RMN ¹H à 400 MHz, RMN ¹³C à 100 MHz) en utilisant CDCl₃ comme solvant référencé par rapport au CHCl₃ résiduel (δH = 7,26 ppm, δC = 77,1 ppm). Les déplacements chimiques sont donnés en ppm et les constantes de couplage (J) en Hertz. Les données pour les spectres RMN ¹H sont rapportées comme suit : déplacement chimique ppm (br s = singulet large, s = singulet, d = doublet, t = triplet, q = quadruplet, dd = doublet de doublets, td = triplet de doublets, ddd = doublet de doublets de doublets, m = multiplet, constantes de couplage, intégration).

Les spectres de masse à haute résolution (HRMS) ont été obtenus sur un spectromètre JEOL JMS-GCmate II et sont rapportés en m/z.

Les spectres infrarouges ont été enregistrés sur un spectromètre FTIR PerkinElmer en utilisant la technique de réflectance totale atténuée (*ATR* de l'anglais « *Attenuated Total Reflectance* »). Les maxima d'absorption (vₘₐₓ) sont rapportés en nombres d'onde (cm⁻¹).

### EXEMPLE 1 : Synthèse du composé Ia1

### Préparation du dihydropinosylvine de formule (IIIa1)

Le dihydropinosylvine a été préparé selon les étapes illustrées dans le schéma suivant :

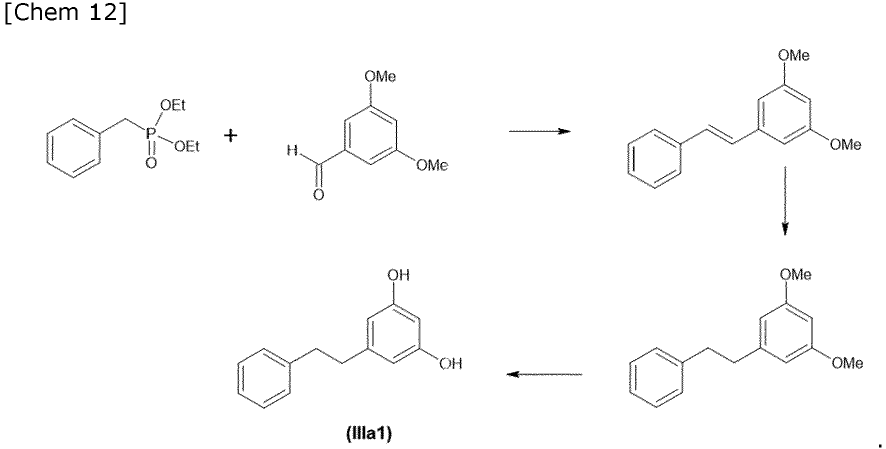

### 1.1 Première étape : Préparation du (E)-3,5-diméthoxystilbène

La première étape est une réaction de Horner-Wadsworth-Emmons. À un ballon de 500 ml séché à la flamme et équipé d'un barreau aimanté, sous atmosphère inerte, a été ajouté du tert-butylate de potassium (t-BuOK) (10,8 g, 96,3 mmol) et du tetrahydrofurane (THF) anhydre (120 ml). Le mélange a été refroidi dans un bain de glace, puis du benzylphosphonate de diéthyle (20,6 ml, 90,3 mmol) a été ajouté goutte à goutte pendant 30 minutes, suivi d'une addition par portions de 3,5-diméthoxybenzaldéhyde (10,0 g, 60,2 mmol). Le mélange a été laissé remonter à température ambiante puis agité pendant 2h. Le THF a été éliminé sous vide, puis un mélange d'eau et de méthanol (H₂O: MeOH) (2:1, environ 60 ml) a été ajouté jusqu'à précipitation du produit. Une filtration et un séchage sous vide donnent le (E)-3,5-diméthoxystilbène sous la forme d'un solide blanc (13,5 g, 56,0 mmol, rendement 93%).

RMN ¹H (400 MHz, CDCl₃) : δ = 7.53 - 7.49 (m, 2H), 7.39 - 7.33 (m, 2H), 7.29 - 7.23 (m, 1H), 7.09 (d, J = 16.3 Hz, 1H), 7.04 (d, J = 16.3 Hz, 1H), 6.69 - 6.66 (m, 2H), 6.40 (t, J = 2.3 Hz, 1H), 3.83 (s, 6H).

### 1.2. Deuxième étape : Préparation du 1,3-diméthoxy-5-phénéthylbenzène

La deuxième étape est une réaction d'hydrogénation catalytique de la double liaison mettant en œuvre du formiate d'ammonium. Elle permet ainsi d'éviter l'utilisation d'hydrogène gazeux. À un ballon de 500 ml séché à la flamme, on a ajouté le (E)-3,5-diméthoxystilbène tel que préparé à l'étape précédente (14,0 g, 58,2 mmol) et 10 % de Pd/C (1,40 g, 10 % en poids), suivis de l'acétate d'éthyle (243 ml, 0,245 M). Du formiate d'ammonium (18,4 g, 291 mmol) a ensuite été ajouté et le mélange a été laissé sous agitation pendant la nuit à température ambiante. Le mélange réactionnel a ensuite été filtré sur un tampon de célite et évaporé sous vide. Le formiate d'ammonium restant a été précipité par ajout de dichlorométhane et le mélange a été filtré à nouveau puis évaporé sous vide pour donner le 1,3-diméthoxy-5-phénéthylbenzène attendu sous forme d'une huile jaune clair (12,7 g, 52,4 mmol, rendement 90%).

RMN ¹H (400 MHz, CDCl₃) : δ = 7.32 - 7.25 (m, 2H), 7.23 - 7.17 (m, 3H), 6.36 - 6.30 (m, 3H), 3.76 (s, 6H), 2.95 - 2.82 (m, 4H).

### 1.3. Troisième étape : Préparation de la dihydropinosylvine

La troisième étape est une déméthylation des phénols en milieu aqueux acide. À un ballon de 250 ml équipé d'un barreau aimanté, on a ajouté le 1,3-diméthoxy-5-phénéthylbenzène tel que préparé à l'étape précédente (2,03 g, 8,38 mmol) puis de l'acide bromhydrique (HBr) (24,6 mL, 48 % en poids dans l'eau) et de l'acide acétique glacial (24,6 mL, HBr:AcOH 1:1 v/v, concentration finale de 0,15 M). Le mélange réactionnel a ensuite été chauffé au reflux pendant 4h et laissé refroidir à température ambiante. Le mélange réactionnel a été dilué avec de l'eau (50 ml) et extrait avec de l'éther diéthylique (Et₂O) (3 x 50 mL). La phase organique a été traitée au charbon actif, filtrée et réduite sous vide pour donner la dihydropinosylvine sous forme d'un solide blanc (1,68 g, 7,86 mmol, 94%).

RMN ¹H (400 MHz, CDCl₃) : δ = 7.33 - 7.25 (m, 2H), 7.24 - 7.15 (m, 3H), 6.31 - 6.18 (m, 3H), 4.71 (br s, 2H), 2.93 - 2.75 (m, 4H).

### Préparation du 2,2-Diméthyl-7-phénéthyl-2H-chromèn-5-ol (composé Ia1)

À un tube scellé séché à la flamme et équipé d'un barreau aimanté sous atmosphère inerte, a été ajouté la dihydropinosylvine obtenue à l'étape précédente (4,00 g, 18,7 mmoles - 1 équiv.) suivi de toluène anhydre (0,1 M) et du 3-méthyl-2-buténal (prénal) (1,5 équiv.). Du diacétate d'éthylènediammonium (EDDA, 5 mol%) a ensuite été ajouté. Le récipient a été scellé et chauffé à 115°C pendant 1 h. Cette procédure (ajout d'EDDA et chauffage) a été répétée 3 fois (totalisant une addition de 15 mol% d'EDDA), puis après retour à température ambiante une petite quantité de silice a été ajoutée et le solvant éliminé sous vide. Le mélange brut a été purifié par chromatographie sur colonne de silice flash (chargement à sec), avec une élution à l'hexane/acétate d'éthyle pour donner le 2,2-diméthyl-7-phénéthyl-2H-chromèn-5-ol (composé **6**) attendu sous la forme d'un liquide brun visqueux (4,28 g, 15,3 mmol, rendement 82%).

RMN ¹H (400 MHz, CDCl₃) : δ = 7.31 - 7.24 (m, 2H), 7.22 - 7.15 (m, 3H), 6.58 (d, *J* = 10.0, 1H), 6.32 - 6.29 (m, 1H), 6.14 - 6.10 (m, 1H), 5.55 (d, *J* = 10.0, 1H), 4.59 (br s, 1H), 2.92 - 2.83 (m, 2H), 2.80 - 2.73 (m, 2H), 1.42 (s, 6H).

### EXEMPLE 2 : Synthèse du composé Ia1

### Préparation du 2-méthyl-7-phénéthyl-2H-chromèn-5-ol

À un tube scellé séché à la flamme et équipé d'un barreau aimanté sous atmosphère inerte a été ajouté le composé (IIIa1) tel que préparé précédemment dans l'exemple 1 (300 mg, 1,4 mmol, 1 équiv.) suivi du toluène anhydre (0,1 M) et du (2*E*)-but-2-énal (1,5 équiv.). Le diacétate d'éthylène diammonium (EDDA, 5 mol%) a ensuite été ajouté. Le récipient a été scellé et chauffé à 115°C pendant 1h. Cette procédure (ajout d'EDDA et chauffage) a été répétée 3 fois (totalisant une addition de 15 mol% d'EDDA), puis après retour à température ambiante une petite quantité de silice a été ajoutée et le solvant éliminé sous vide. Le mélange brut a été purifié par chromatographie sur colonne de silice flash (chargement à sec), avec une élution à l'hexane/EtOAc pour donner le chromène (Ia2) correspondant sous forme d'un liquide brun visqueux (13 mg, 0,0488 mmol, rendement 3%).

RMN ¹H (400 MHz, CDCl₃) : δ = 7.32 - 7.13 (m, 5H), 6.65 (d, *J* = 9.8, 1H), 6.33 - 6.28 (m, 1H), 6.15 - 6.08 (m, 1H), 5.58 (d, *J* = 9.8, 1H), 5.02 - 4.88 (m, 2H), 2.95 - 2.69 (m, 4H), 1.43 (d, *J* = 6.8, 3H).

### EXEMPLE 3 : Synthèse du composé Ia3

### Préparation de l'aldéhyde de formule (IIa3)

L'aldéhyde de formule (IIa3) a été préparé selon les étapes illustrées dans le schéma suivant :

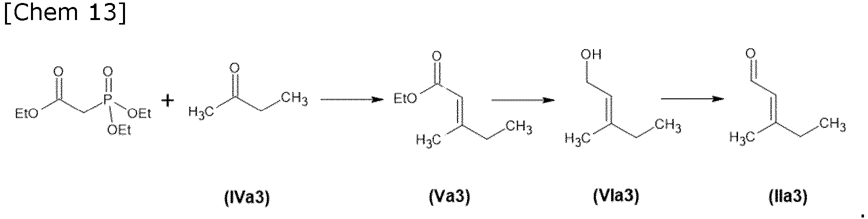

### 3.1 Première étape : Préparation du (E/Z)-3-Méthylpent-2-énoate d'éthyle

Dans un ballon à fond rond séché à la flamme et équipé d'un barreau aimanté sous atmosphère d'argon, on a ajouté NaH (dispersion dans l'huile minérale à 60%, 1,4 équiv.) et du THF anhydre (concentration finale : 0,26 M). La suspension obtenue a été refroidie à 0°C, puis le phosphonoacétate de triéthyle (1,5 équiv.) a été ajouté goutte à goutte avec une seringue pendant 30 minutes, suivi de la butanone de formule (IVa3) (1,25 ml, 13,9 mmol, 1 équiv.). Le mélange a été laissé se réchauffer à température ambiante et agité pendant la nuit, puis la réaction a été arrêtée avec une solution aqueuse saturée de NH₄Cl. La phase aqueuse a été extraite trois fois avec de l'Et₂O et les phases organiques combinées ont été séchées sur sulfate de magnésium (MgSO₄), évaporées sous vide et purifiées par chromatographie sur colonne, avec comme éluant du CH₂Cl₂, pour conduire au composé (Va3) (E/Z)-3-Méthylpent-2-énoate d'éthyle sous forme d'un liquide jaune visqueux (E/Z = 78:22, 1,94 g, 13,6 mmol, rendement 98%).
Isomère *E* : RMN ¹H (400 MHz, CDCl₃) : δ = 5.67 - 5.65 (m, 1H), 4.15 (q, *J* = 7.2 Hz, 2H), 2.21 - 2.12 (m, 5H, H-4), 1.28 (t, *J* = 7.2 Hz, 3H), 1.07 (t, *J* = 7.5 Hz, 3H).

### 3.2 Deuxième étape : Préparation du (E/Z)-3-Méthylpent-2-én-1-ol

Dans un ballon à fond rond séché à la flamme et équipé d'un barreau aimanté sous atmosphère inerte, on a ajouté le composé (Va3) obtenu à l'étape précédente (3,88 g, 27,3 mmol, 1 équiv.) suivi de CH₂Cl₂ sec (concentration finale : 1,12 M). La solution a été refroidie à 0°C, puis du DIBALH (1M dans CH₂Cl₂, 2,1 équiv.) a été ajouté à l'aide d'une seringue et le mélange a été agité pendant 2h. La réaction a été arrêtée par ajout de MeOH (2,5 équiv.) à 0°C et laissée remonter à température ambiante. Une solution de NaCl saturée a ensuite été ajoutée, suivie d'Et₂O, et le mélange a été filtré sur célite. Les phases ont été séparées, et les phases organiques séchées sur MgSO₄ et concentrées sous vide. Le mélange brut a été purifié par chromatographie sur colonne flash avec comme éluant un mélange Et₂O:CH₂Cl₂ (5% Et₂O:CH₂Cl₂), pour conduire au composé (VIa3) *(E*/*Z)*-3-Méthylpent-2-én-1-ol sous la forme d'un liquide incolore (*E*/*Z* = 78:22, 1,39 g, 13.9 mmol, rendement 51%).

Isomère *E* : RMN ¹H (400 MHz, CDCl₃) : δ = 5.44 - 5.35 (m, 1H), 4.20 - 4.10 (m, 2H), 2.14 - 2.00 (m, 2H), 1.76 - 1.66 (m, 3H), 1.05 - 0.98 (m, 3H).

### 3.3 Troisième étape : Préparation du (E/Z)-3-Méthylpent-2-énal

À un ballon à fond rond séché à la flamme et équipé d'un barreau aimanté sous atmosphère inerte, on a ajouté du MnO₂ (5 équiv.) et du CH₂Cl₂ anhydre (0,49 M), puis le composé (VIa3) obtenu à l'étape précédente (930 mg, 9,29 mmol, 1 équiv.). Un réfrigérant a été connecté et le mélange a été chauffé à reflux pendant la nuit. Le mélange a ensuite été laissé refroidir à température ambiante, puis filtré sur un tampon de célite. Le solvant a été éliminé sous vide et le mélange brut purifié par chromatographie sur colonne flash, avec comme éluant un mélange CH₂Cl₂/pentane (1:1), pour conduire au composé (IIa3) *(E*/*Z)*-3-Méthylpent-2-énal sous forme d'un liquide incolore (*E*/*Z* = 78:22, 400 mg, 13,9 mmol, rendement 44%).

Isomère *E* : RMN ¹H (400 MHz, CDCl₃) : δ = 9.97 (d, *J* = 8.2, 1H, H-1), 5.86 - 5.81 (m, 1H, H-2), 2.60 (q, *J* = 7.5, 2H, H-3), 1.98 (d, *J* = 1.3, 3H, H-4), 1.17 (t, *J* = 7.6, 3H, H-5).

### Préparation du 2-éthyl-2-méthyl-7-phénéthyl-2H-chromèn-5-ol (composé Ia3)

À un tube scellé séché à la flamme et équipé d'un barreau aimanté sous atmosphère inerte a été ajouté le composé (IIIa1) tel que préparé précédemment dans l'exemple 1 (50 mg, 0,233 mmol, 1 équiv.) suivi du toluène anhydre (0,1 M) et de l'aldéhyde (IIa3) tel que préparé précédemment dans l'exemple 3 (1,5 équiv.). Le diacétate d'éthylène diammonium (EDDA, 5 mol%) a ensuite été ajouté. Le récipient a été scellé et chauffé à 115°C pendant 1h. Cette procédure (ajout d'EDDA et chauffage) a été répétée 3 fois (totalisant une addition de 15 mol% d'EDDA), puis après retour à température ambiante une petite quantité de silice a été ajoutée et le solvant éliminé sous vide. Le mélange brut a été purifié par chromatographie sur colonne de silice flash (chargement à sec), avec une élution à l'hexane/EtOAc (95:5, R_{f} = 0.28) pour donner le chromène (Ia3) correspondant sous forme d'un liquide visqueux jaune (27 mg, 0,0017 mmol, 39%).

RMN ¹H (400 MHz, CDCl₃) : δ = 7.30 - 7.24 (m, 2H), 7.22 - 7.14 (m, 3H), 6.26 (d, *J* = 10.1, 1H), 6.30 - 6.27 (m, 1H), 6.11 - 6.08 (m, 1H), 5.49 (d, *J* = 10.1, 1H), 4.85 - 4.68 (br s, 1H), 2.90 - 2.81 (m, 2H), 2.80 - 2.71 (m, 2H), 1.79 - 1.62 (m, 2H), 1.36 (s, 3H), 0.95 (t, *J* = 7.5, 3H).

RMN ¹³C (101 MHz, CDCl₃) : δ = 154.2, 151.1, 143.5, 141.7, 128.4, 128.3, 127.4, 125.9, 116.9, 109.1, 107.7, 107.3, 78.6, 37.9, 37.4, 33.7, 25.8, 8.2.

IR(ATR) : 3404, 2972, 2929, 2869, 1623, 1576, 1496, 1434, 1136, 1062, 829.

HRMS (ESI+) : Calc. pour C₂₀H₂₃O₂⁺ [MH⁺] : 295.1693; Obtenu : 295.1686.

### EXEMPLE 4 : Synthèse du composé Ic1

À un tube scellé séché à la flamme et équipé d'un barreau aimanté sous atmosphère inerte, on a ajouté le composé (Ia1) (100 mg, 0,36 mmol) et 10 % de Pd/C (10 mg, 10 % massique), suivis d'acétate d'éthyle (1,52 mL, 0,245 M). Du formiate d'ammonium (115 mg, 1,82 mmol) a ensuite été ajouté et le mélange a été laissé sous agitation pendant la nuit à température ambiante. Ensuite, on a de nouveau ajouté 10 % en masse de Pd/C (10 mg) et du formiate d'ammonium (68,09 mg, 1,08 mmol). Le mélange réactionnel a été laissé sous agitation pendant 3h puis a été filtré sur un tampon de célite et évaporé sous vide. Le formiate d'ammonium restant a été précipité par ajout de dichlorométhane et le mélange a été filtré à nouveau puis évaporé sous vide pour donner le composé (Ic1) attendu sous forme d'un liquide jaune pâle (97,2 mg, 0,34 mmol, rendement 97%).

¹H RMN (400 MHz, CDCl₃) : δ = 7.32 - 7.24 (m, 2H), 7.22 - 7.14 (m, 2H), 6.33 (d, 1H), 6.19 (d, 1H), 4.63 - 4.59 (br s, 1H), 2.92 - 2.70 (m, 2H), 2.63 (t, 1H), 1.81 (t, 1H), 1.33 (s, 6H).

### EXEMPLE 5 : Utilisation des composés (Ia1), (Ia2), (Ia3) et (Ic1) à titre d'agents herbicides

Les tests biologiques ont été réalisés en conditions axéniques sur plantules d'*Arabidopsis thaliana* écotype Col-0 cultivées en hydroponie au stade cotylédons. Les graines stérilisées sont semées en microplaques (10 graines par puits contenant 200 µL d'eau distillée) et cultivées 10-13 jours à 22°C sous éclairage en photopériode 16h/8h (jour/nuit). Le traitement a été effectué en remplaçant le milieu de culture par un volume équivalent d'eau contenant la molécule à tester dissoute dans le DMSO.. La concentration en DMSO maximale au sein des puits traités était de 1% volumique. Un contrôle a donc été mis en place avec présence de DMSO à cette concentration. La phytotoxicité du traitement a été évaluée après 48h de culture, par analyse visuelle de la chlorose induite.

A titre comparatif, des essais ont également été réalisés dans les mêmes conditions que pour les composés (Ia1), (Ia2), (Ia3) et (Ic1), mais avec deux composés comparatifs ne faisant pas partie de l'invention:
- un composé (2) comportant un noyau diphénolique à la place du noyau chromène et
- un composé (3) comportant un noyau chromène mais ne comportant pas de groupe -L-Ar.
Tous les composés ont été testés à une concentration de 125 µM.

Les résultats sont donnés dans le tableau 2 ci-après.

La manifestation d'une activité herbicide est signalée par A pour Active dans le cas où la plante est tuée, c'est-à-dire quand les deux cotylédons ont perdu l'ensemble de leur coloration verte, 48 h après application du produit.

L'absence d'activité herbicide est signalée par « N » pour Non active, dans le cas où aucune activité biologique n'est observée.

**[TABLEAU 2]**

| Nom | Formule développée | Activité après 48h |
|---|---|---|
| Composé Ia1 | 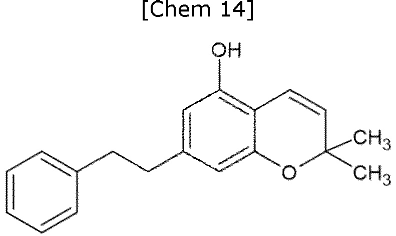 | A |
| Composé Ia2 | 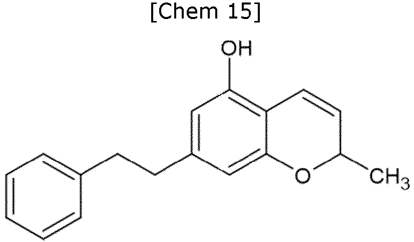 | A |
| Composé Ia3 | 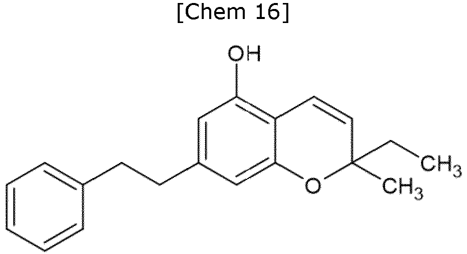 | A |
| Composé Ic1 | 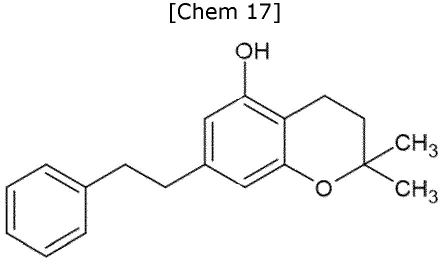 | A |
| Composé 2 non conforme à l'invention | 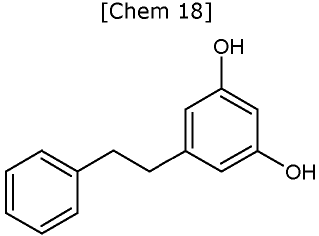 | N |
| Composé 3 non conforme à l'invention | 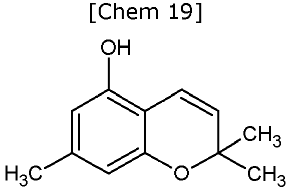 | N |

Ainsi que cela ressort du tableau ci-dessus, les composés 2 et 3 non conformes à l'invention ne présentent aucune activité herbicide à la concentration testée.

Ces essais mettent en évidence que :
- la présence d'un noyau hétérobicyclique est indispensable (comparaison entre le composé de formule Ia1 conforme à l'invention et le composé (2) non conforme à l'invention,
- la substitution de ce noyau hétérobicyclique par un groupement de type -L-Ar est également indispensable (comparaison entre composé de formule Ia1 conforme à l'invention et le composé (3) non conforme à l'invention.

## Revendications

1. Utilisation d'au moins un composé choisi parmi un composé répondant à la formule (I), un de ses isomères, et un de leurs sels organiques et inorganiques, en tant qu'agent herbicide,
ladite formule (I) ayant la structure suivante : 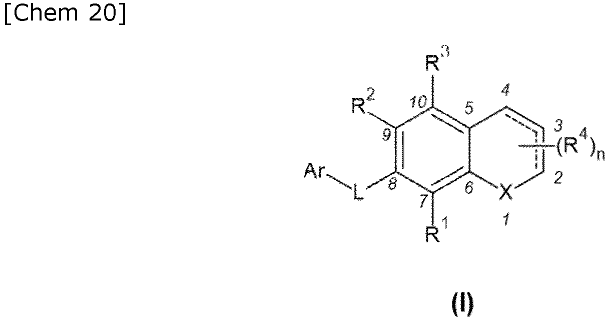 dans laquelle :
* R¹, R², et R³ représentent, indépendamment les uns des autres, un atome d'hydrogène, un atome d'halogène, un radical alkyle ou cycloalkyle en C₁ à C₆, ou un groupe choisi parmi -OH, -COOH, -COOR⁵, -OR⁵ et -SO₂R⁵, avec R⁵ étant un radical alkyle ou cycloalkyle en C₁ à C₅, ledit radical alkyle ou cycloalkyle en C₁ à C₅ pouvant être substitué par un ou plusieurs substituants choisis parmi un atome d'halogène et un groupe hydroxyle,
* X fait partie d'un hétérocycle à six chainons et représente un atome d'oxygène, un atome de soufre, un groupe divalent SO, un groupe divalent SO₂, et un groupe divalent NR⁶, avec R⁶ étant un atome d'hydrogène, un radical alkyle ou cycloalkyle en C₁ à Cs, ou un radical aryle ou hétéroaryle en C₂ à Cs,
* le symbole - - - - - - représente une liaison simple ou une liaison double en position 2,3 ou 3,4 de l'hétérocycle à six chaînons portant l'hétéroatome ou le groupe divalent X, de sorte que ledit hétérocycle à six chaînons comprend soit deux simples liaisons en positions 2,3 et 3,4, soit une simple liaison en position 2,3 et une double liaison en position 3,4, soit une double liaison en position 2,3 et une simple liaison en position 3,4,
* L représente un bras de liaison choisi parmi les chaines alkylènes linéaires et ramifiées ayant au moins un atome de carbone, lesdites chaines alkylènes linéaires ou ramifiées pouvant être interrompues et/ou terminées par un ou plusieurs hétéroatomes choisis parmi un atome d'oxygène, de soufre, et d'azote substitué,
* Ar représente un groupe aromatique choisi parmi les groupes phényle, naphtyle, furyle, thiophényle, pyrrolyle, pyridinyle, indolyle, isoindolyle, benzofuryle, benzothiophényle, quinolyle, isoquinolyle, imidazolyle, oxazolyle, thiazolyle, pyrimidyle, pyridazyle, pyrazyle, pyrrazolyle, et triazolyle, ledit groupe aromatique pouvant être substitué par un ou plusieurs substituants choisis parmi un atome d'halogène, un radical alkyle ou cycloalkyle en C₁ à C₅, un groupe -OH, un groupe -COOH, un groupe -COOR⁷, un groupe -OR⁷, et un groupe -SO₂R⁷, avec R⁷ étant un radical alkyle ou cycloalkyle en C₁ à Cs, ledit radical alkyle ou cycloalkyle en C₁ à C₅ pouvant être substitué par un ou plusieurs substituants choisis parmi un atome d'halogène et un groupe hydroxyle,
* n est un nombre entier allant de 4 à 6 et représente le nombre de substituants R⁴, identiques ou différents, présents sur l'hétérocycle à six chaînons, et
* R⁴ représente un atome d'hydrogène, un atome d'halogène, un radical alkyle ou cycloalkyle en C₁ à Cs, ou un groupe choisi parmi -OH, -COOH, -COOR⁸, -OR⁸ et - SO₂R⁸, avec R⁸ étant un radical alkyle ou cycloalkyle en C₁ à Cs, ledit radical alkyle ou cycloalkyle en C₁ à C₅ pouvant être substitué par un ou plusieurs substituants choisis parmi un atome d'halogène et un groupe hydroxyle.

2. Utilisation selon la revendication 1, **caractérisée en ce que** X représente un atome d'oxygène.

3. Utilisation selon la revendication 1 ou 2, **caractérisée en ce qu'**au moins l'un des groupes R¹, R², et R³ représente un groupe -OH.

4. Utilisation selon l'une quelconque des revendications précédentes, **caractérisée en ce que** le groupe R³ représente un groupe -OH, et les deux autres groupes R¹ et R² représentent, indépendamment l'un de l'autre, un atome d'hydrogène, un groupe -COOH, ou un groupe -COOR⁵, avec R⁵ étant un radical alkyle en C₁ à C₅.

5. Utilisation selon l'une quelconque des revendications précédentes, **caractérisée en ce que** L représente une chaine alkylène linéaire ayant de 1 à 6 atomes de carbone.

6. Utilisation selon l'une quelconque des revendications précédentes, **caractérisée en ce que** Ar représente un groupe phényle, ledit groupe phényle pouvant être substitué par un ou plusieurs substituants tels que définis dans la revendication 1.

7. Utilisation selon l'une quelconque des revendications précédentes, **caractérisée en ce que** l'hétérocycle comprend une double liaison, le composé de formule (I) répond alors à la formule (Ia) ou (Ib) suivante : 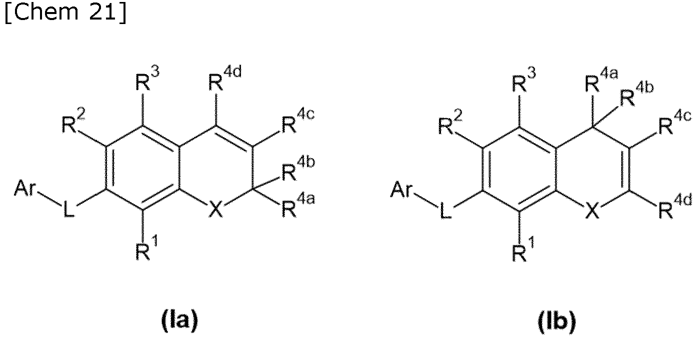 dans laquelle :
* Ar, L, R¹, R², R³, et X sont tels que définis à l'une quelconque des revendications 1 à 6, et
* R^{4a}, R^{4b}, R^{4c}, et R^{4d}, identiques ou différents, représentent un atome d'hydrogène ou un radical alkyle ou cycloalkyle en C₁ à Cs, ledit radical alkyle ou cycloalkyle en C₁ à C₅ pouvant être substitué par un ou plusieurs atomes d'halogène.

8. Utilisation selon la revendication 7, **caractérisée en ce que** R^{4a} représente un radical alkyle en C₁ à C₃ éventuellement substitué par un ou plusieurs atomes d'halogène, R^{4b} représente un atome d'hydrogène ou un radical alkyle en C₁ à C₃ éventuellement substitué par un ou plusieurs atomes d'halogène, et R^{4c} et R^{4d} représentent un atome d'hydrogène.

9. Utilisation selon l'une quelconque des revendications 1 à 6, **caractérisée en ce que** l'hétérocycle ne comprend pas de double liaison, le composé de formule (I) répond alors à la formule (Ic) suivante : 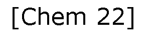 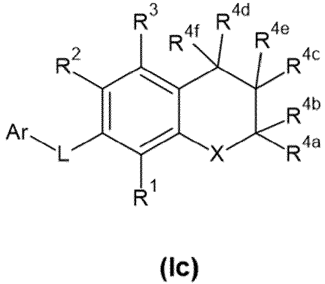 dans laquelle :
* Ar, L, R¹, R², R³, et X sont tels que définis à l'une quelconque des revendications 1 à 6, et
* R^{4a}, R^{4b}, R^{4c}, R^{4d}, R^{4e}, et R^{4f}, identiques ou différents, représentent un atome d'hydrogène ou un radical alkyle ou cycloalkyle en C₁ à Cs, ledit radical alkyle ou cycloalkyle en C₁ à C₅ pouvant être substitué par un ou plusieurs atomes d'halogène.

10. Utilisation selon la revendication 9, **caractérisée en ce que** R^{4a} et R^{4b} représentent un radical méthyle, et R^{4c}, R^{4d}, R^{4e}, et R^{4f} représentent un atome d'hydrogène.

11. Utilisation selon l'une quelconque des revendications précédentes, **caractérisée en ce que** le composé de formule (I) est choisi parmi les composés suivants :
**[Tableau 3]**
| Nom | Formule développée |
|---|---|
| Composé Ia1 | 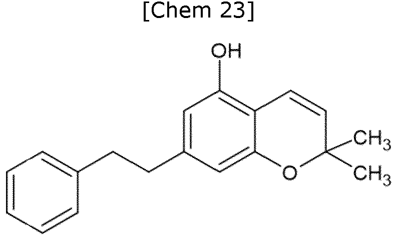 |
| Composé Ia2 | 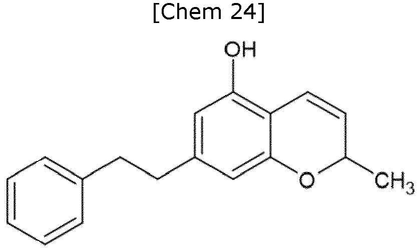 |
| Composé Ia3 | 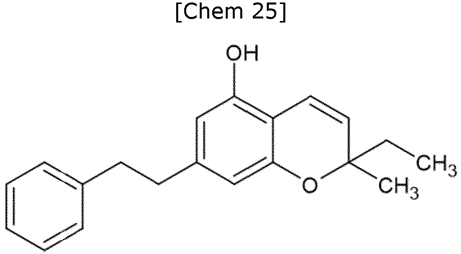 |
| Composé Ic1 | 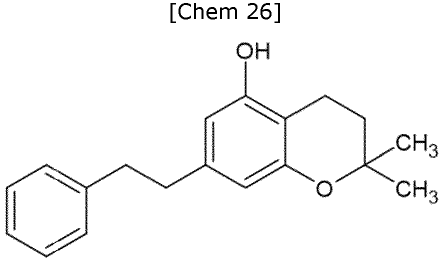 |

12. Composition phytotoxique, **caractérisée en ce qu'**elle comprend, à titre de substance active herbicide, au moins un composé tel que défini à l'une quelconque des revendications 1 à 11, en combinaison avec un ou plusieurs additifs de formulation permettant d'améliorer la solubilité dans l'eau et/ou la pénétration dans les tissus végétaux.

13. Composition phytotoxique selon la revendication 12, **caractérisée en ce qu'**elle comprend en outre un ou plusieurs autres actifs choisi(s) parmi les fertilisants, les régulateurs de croissance, et les agents herbicides annexes.

14. Procédé pour contrôler le développement et/ou traiter des plantes indésirables en surface d'une zone cible comprenant la mise en contact de la zone cible avec une quantité efficace d'au moins un composé tel que défini à l'une quelconque des revendications 1 à 11 ou d'au moins une composition phytotoxique telle que définie à la revendication 12 ou 13.

## Patentansprüche

1. Verwendung wenigstens einer Verbindung, die aus einer Verbindung der Formel (I), einem ihrer Isomere und einem ihrer organischen und anorganischen Salze ausgewählt ist, als Herbizid,
wobei die Formel (I) die folgende Struktur aufweist: 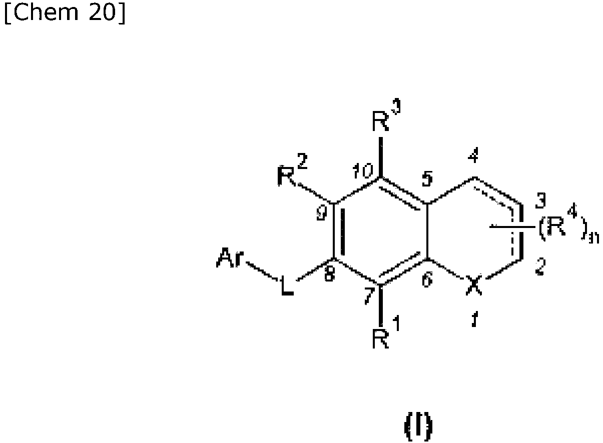 wobei:
* R¹, R² und R³ unabhängig voneinander für ein Wasserstoffatom, ein Halogenatom, einen C₁- bis C₅-Alkyl- oder -Cycloalkylrest oder eine Gruppe, die aus -OH, -COOH, -COOR⁵, -OR⁵ und -SO₂R⁵ ausgewählt ist, stehen, wobei R⁵ ein C₁- bis C₅-Alkyl- oder -Cycloalkylrest ist, wobei der C₁- bis C₅-Alkyl- oder -Cycloalkylrest mit einem oder mehreren Substituenten substituiert sein kann, die aus einem Halogenatom und einer Hydroxygruppe ausgewählt sind,
*X Teil eines sechsgliedrigen Heterocyclus ist und für ein Sauerstoffatom, ein Schwefelatom, eine zweiwertige SO-Gruppe, eine zweiwertige SO₂-Gruppe oder eine zweiwertige NR⁶-Gruppe steht, wobei R⁶ ein Wasserstoffatom, ein C₁- bis C₅-Alkyl- oder -Cycloalkylrest oder ein C₂- bis C₈-Aryl- oder -Heteroarylrest ist,
* das Symbol - - - - - für eine Einfachbindung oder eine Doppelbindung auf Position 2,3 oder 3,4 des sechsgliedrigen Heterocyclus, der das Heteroatom oder die zweiwertige Gruppe X trägt, steht, so dass der sechsgliedrige Heterocyclus entweder zwei Einfachbindungen auf den Positionen 2,3 und 3,4 oder eine Einfachbindung auf Position 2,3 und eine Doppelbindung auf Position 3,4 oder eine Doppelbindung auf Position 2,3 und eine Einfachbindung auf Position 3,4 umfasst,
* L für einen Verbindungsarm steht, der aus linearen und verzweigten Alkylenketten mit wenigstens einem Kohlenstoffatom ausgewählt ist, wobei die linearen und verzweigten Alkylenketten durch ein oder mehrere Heteroatome, die aus einem Sauerstoff-, Schwefel- und substituierten Stickstoffatom ausgewählt sind, unterbrochen und/oder abgeschlossen sein können,
* Ar für eine aromatische Gruppe steht, die aus einer Phenyl-, Naphthyl-, Furyl-, Thiophenyl-, Pyrrolyl-, Pyridinyl-, Indolyl-, Isoindolyl-, Benzofuryl-, Benzothiophenyl-, Chinolyl-, Isochinolyl-, Imidazolyl-, Oxazolyl-, Thiazolyl-, Pyrimidyl-, Pyridazyl-, Pyrazyl-, Pyrrazolyl- und Triazolylgruppe ausgewählt ist, wobei die aromatische Gruppe mit einem oder mehreren Substituenten substituiert sein kann, die aus einem Halogenatom, einem C₁-bis C₅-Alkyl- oder -Cycloalkylrest, einer OH-Gruppe, einer COOH-Gruppe, einer COOR⁷-Gruppe, einer OR⁷-Gruppe und einer SO₂R⁷-Gruppe ausgewählt sein können, wobei R⁷ ein C₁- bis C₅-Alkyl- oder -Cycloalkylrest ist, wobei der C₁- bis C₅-Alkyl- oder -Cycloalkylrest mit einem oder mehreren Substituenten substituiert sein kann, die aus einem Halogenatom und einer Hydroxygruppe ausgewählt sind,
* n eine ganze Zahl von 4 bis 6 ist und für die Anzahl der gleichen oder verschiedenen Substituenten R⁴ steht, die an dem sechsgliedrigen Heterocyclus vorhanden sein können, und
* R⁴ für ein Wasserstoffatom, ein Halogenatom, einen C₁- bis C₅-Alkyl- oder -Cycloalkylrest oder eine Gruppe, die aus -OH, -COOH, -COOR⁸, -OR⁸ und-SO₂R⁸ ausgewählt ist, stehen, wobei R⁸ ein C₁- bis C₅-Alkyl- oder-Cycloalkylrest ist, wobei der C₁- bis C₅-Alkyl- oder -Cycloalkylrest mit einem oder mehreren Substituenten substituiert sein kann, die aus einem Halogenatom und einer Hydroxygruppe ausgewählt sind.

2. Verwendung gemäß Anspruch 1, **dadurch gekennzeichnet, dass** X für ein Sauerstoffatom steht.

3. Verwendung gemäß Anspruch 1 oder 2, **dadurch gekennzeichnet, dass** wenigstens eine der Gruppen R¹, R² und R³ für eine OH-Gruppe steht.

4. Verwendung gemäß einem der vorstehenden Ansprüche, **dadurch gekennzeichnet, dass** die Gruppe R³ für eine Gruppe -OH steht und die zwei anderen Gruppen R¹ und R² unabhängig voneinander für ein Wasserstoffatom, eine COOH-Gruppe oder eine COOR⁵-Gruppe stehen, wobei R⁵ ein C₁- bis C₅-Alkylrest ist.

5. Verwendung gemäß einem der vorstehenden Ansprüche, **dadurch gekennzeichnet, dass** L für eine lineare Alkylenkette mit 1 bis 6 Kohlenstoffatomen steht.

6. Verwendung gemäß einem der vorstehenden Ansprüche, **dadurch gekennzeichnet, dass** Ar für eine Phenylgruppe steht, die Phenylgruppe mit einem oder mehreren Substituenten, wie sie in Anspruch 1 definiert sind, substituiert sein kann.

7. Verwendung gemäß einem der vorstehenden Ansprüche, **dadurch gekennzeichnet, dass** der Heterocyclus eine Doppelbindung umfasst, die Verbindung der Formel (I) also der folgenden Formel (Ia) oder (Ib) entspricht: 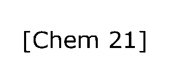 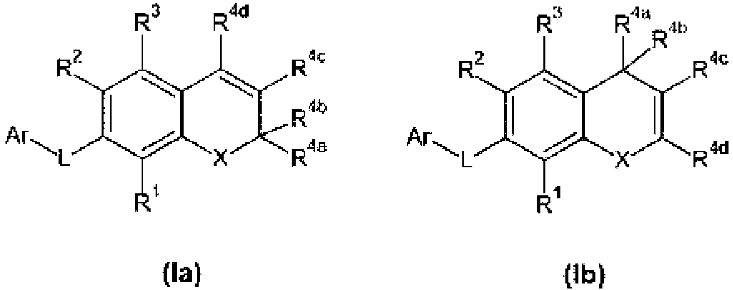 wobei:
* Ar, L, R¹, R², R³ und X wie in einem der Ansprüche 1 bis 6 definiert sind und
* R^{4a}, R^{4b}, R^{4c} und R^{4d}, die gleich oder verschieden sind, für ein Wasserstoffatom oder einen C₁- bis C₅-Alkyl- oder -Cycloalkylrest stehen, wobei der C₁- bis C₅-Alkyl- oder -Cycloalkylrest mit einem oder mehreren Halogenatomen substituiert sein kann.

8. Verwendung gemäß Anspruch 7, **dadurch gekennzeichnet, dass** R^{4a} für einen C₁- bis C₃-Alkylrest steht, der gegebenenfalls mit einem oder mehreren Halogenatomen substituiert ist, R^{4b} für ein Wasserstoffatom oder einen C₁-bis C₃-Alkylrest, der gegebenenfalls mit einem oder mehreren Halogenatomen substituiert ist, steht und R^{4c} und R^{4d} für ein Wasserstoffatom stehen.

9. Verwendung gemäß einem der Ansprüche 1 bis 6, **dadurch gekennzeichnet, dass** der Heterocyclus keine Doppelbindung umfasst, so dass die Verbindung der Formel (I) der folgenden Formel (Ic) entspricht: 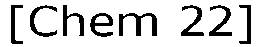 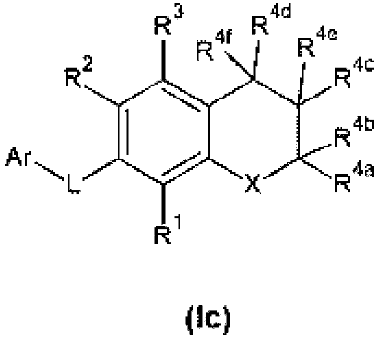 wobei:
* Ar, L, R¹, R², R³ und X wie in einem der Ansprüche 1 bis 6 definiert sind und
* R^{4a}, R^{4b}, R^{4c}, R^{4d}, R^{4e} und R^{4f}, die gleich oder verschieden sind, für ein Wasserstoffatom oder einen C₁- bis C₅-Alkyl- oder -Cycloalkylrest stehen, wobei der C₁- bis C₅-Alkyl- oder -Cycloalkylrest mit einem oder mehreren Halogenatomen substituiert sein kann.

10. Verwendung gemäß Anspruch 9, **dadurch gekennzeichnet, dass** R^{4a} und R^{4b} für einen Methylrest stehen und R^{4c}, R^{4d}, R^{4e} und R^{4f} für ein Wasserstoffatom stehen.

11. Verwendung gemäß einem der vorstehenden Ansprüche, **dadurch gekennzeichnet, dass** die Verbindung der Formel (I) aus den folgenden Verbindungen ausgewählt ist:
**[Tabelle 3]**
| Name | Strukturformel |
|---|---|
| Verbindung Ia1 | 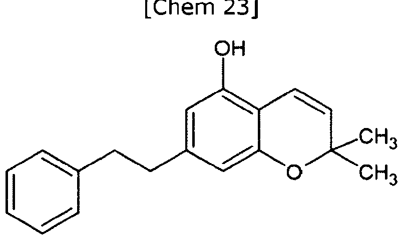 |
| Verbindung Ia2 | 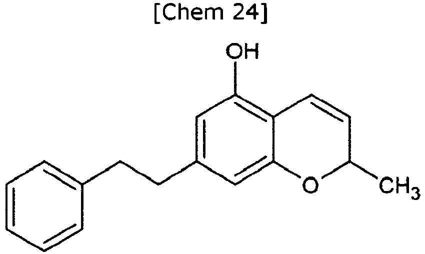 |
| Verbindung Ia3 | 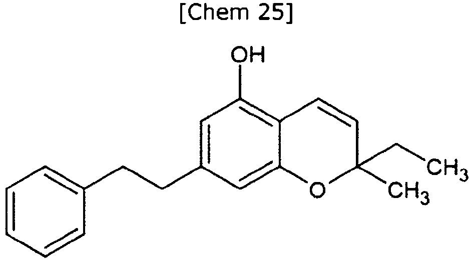 |
| Verbindung Ic1 | 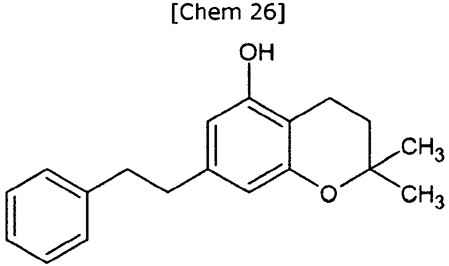 |

12. Phytotoxische Zusammensetzung, **dadurch gekennzeichnet, dass** sie als herbiziden Wirkstoff wenigstens eine Verbindung, wie sie in einem der Ansprüche 1 bis 11 definiert ist, in Kombination mit einem oder mehreren Formulierungshilfsstoffen, die es ermöglichen, die Löslichkeit in Wasser und/oder das Eindringen in Pflanzengewebe zu verbessern, umfasst.

13. Phytotoxische Zusammensetzung gemäß Anspruch 12, **dadurch gekennzeichnet, dass** sie weiterhin einen oder mehrere andere Wirkstoffe umfasst, die aus Düngern, Wachstumsregulatoren und Hilhsherbiziden ausgewählt sind.

14. Verfahren zur Steuerung der Entwicklung und/oder Behandlung unerwünschter Pflanzen auf der Oberfläche eines Zielbereichs, umfassend das In-Kontakt-Bringen des Zielbereichs mit einer wirksamen Menge wenigstens einer Verbindung, wie sie in einem der Ansprüche 1 bis 11 definiert ist, oder mit wenigstens einer phytotoxischen Zusammensetzung, wie sie in Anspruch 12 oder 13 definiert ist.

## Claims

1. Use of at least one compound selected from a compound having the formula (I), an isomer thereof, and one of their organic and inorganic salts, as a herbicidal agent, said formula (I) having the following structure: 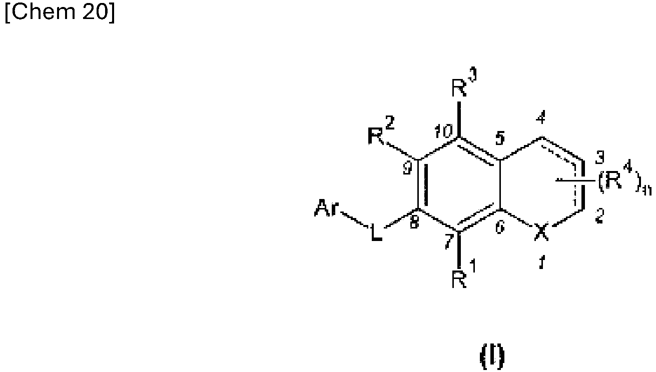 wherein:
* R¹, R² and R³ represent, independently of each other, a hydrogen atom, a halogen atom, a C₁-C₅ alkyl or cycloalkyl radical, or a group selected from -OH, -COOH, -COOR⁵, -OR⁵ and -SO₂R⁵, with R⁵ being a C₁-C₅ alkyl or cycloalkyl radical, it being possible for said C₁-C₅ alkyl or cycloalkyl radical to be substituted with one or more substituents selected from a halogen atom and a hydroxyl group,
* X is part of a six-membered heterocycle and represents an oxygen atom, a sulphur atom, a divalent SO group, a divalent SO₂ group and a divalent NR⁶ group, with R⁶ being a hydrogen atom, a C₁-C₅ alkyl or cycloalkyl radical, or a C₂-C₈ aryl or heteroaryl radical,
* the symbol - - - - - - represents a single bond or a double bond in the 2,3- or 3,4-position of the six-membered heterocycle bearing the heteroatom or the divalent group X, so that said six-membered heterocycle comprises either two single bonds in the 2,3- and 3,4-positions, or a single bond in the 2,3-position and a double bond in the 3,4-position, or a double bond in the 2,3-position and a single bond in the 3,4-position,
* L represents a bonding arm selected from linear and branched alkylene chains having at least one carbon atom, it being possible for said linear or branched alkylene chains to be interrupted and/or terminated by one or more heteroatoms selected from an oxygen, sulphur or substituted nitrogen atom,
* Ar represents an aromatic group selected from phenyl, naphthyl, furyl, thiophenyl, pyrrolyl, pyridinyl, indolyl, isoindolyl, benzofuryl, benzothiophenyl, quinolyl and isoquinolyl, imidazolyl, oxazolyl, thiazolyl, pyrimidyl, pyridazyl, pyrazyl, pyrrazolyl and triazolyl groups, it being possible for said aromatic group to be substituted with one or more substituents selected from a halogen atom, a C₁ to C₅ alkyl or cycloalkyl radical, an -OH group, a -COOH group, a -COOR⁷ group, an -OR⁷ group, and an -SO2R⁷ group, with R⁷ being a C₁ to C₅ alkyl or cycloalkyl radical, it being possible for said C₁ to C₅ alkyl or cycloalkyl radical to be substituted with one or more substituents selected from a halogen atom and a hydroxyl group,
* n is an integer ranging from 4 to 6 and represents the number of identical or different substituents R⁴ present on the six-membered heterocycle, and
* R⁴ represents a hydrogen atom, a halogen atom, a C₁ to C₅ alkyl or cycloalkyl radical, or a group selected from -OH, -COOH, -COOR⁸, -OR⁸ and -SO₂R⁸, with R⁸ being a C₁ to C₅ alkyl or cycloalkyl radical, it being possible for said C₁ to C₅ alkyl or cycloalkyl radical to be substituted with one or more substituents selected from a halogen atom and a hydroxyl group.

2. Use according to claim 1, **characterised in that** X represents an oxygen atom.

3. Use according to claim 1 or 2, **characterised in that** at least one of the groups R¹, R² and R³ represents an -OH group.

4. Use according to any one of the preceding claims, **characterised in that** the group R³ represents an -OH group, and the other two groups R¹ and R² represent, independently of each other, a hydrogen atom, a -COOH group or a -COOR⁵ group, with R⁵ being a C₁ to C₅ alkyl radical.

5. Use according to any one of the preceding claims, **characterised in that** L represents a linear alkylene chain having from 1 to 6 carbon atoms.

6. Use according to any one of the preceding claims, **characterised in that** Ar represents a phenyl group, wherein said phenyl group can be substituted with one or more substituents as defined in claim 1.

7. Use according to any one of the preceding claims, **characterised in that** the heterocycle comprises a double bond, the compound of the formula (I) then having the following formula (Ia) or (Ib): 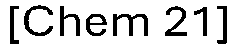 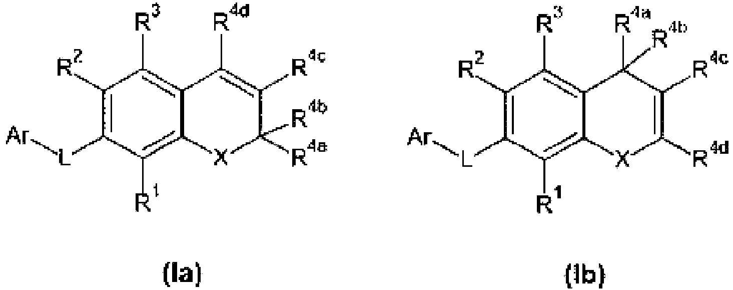 wherein:
* Ar, L, R¹, R², R³ and X are as defined in any of claims 1 to 6, and
* R^{4a}, R^{4b}, R^{4c} and R^{4d}, which may be identical or different, represent a hydrogen atom or a C₁-C₅ alkyl or cycloalkyl radical, it being possible for said C₁-C₅ alkyl or cycloalkyl radical to be substituted with one or more halogen atoms

8. Use according to claim 7, **characterised in that** R^{4a} represents a C₁-C₃ alkyl radical optionally substituted with one or more halogen atoms, R^{4b} represents a hydrogen atom or a C₁-C₃ alkyl radical optionally substituted with one or more halogen atoms, and R^{4c} and R^{4d} represent a hydrogen atom.

9. Use according to any one of claims 1 to 6, **characterised in that** the heterocycle does not comprise a double bond, the compound of the formula (I) then having the following formula (Ic): 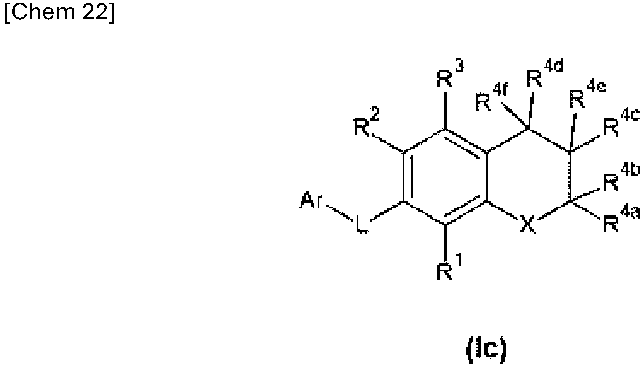 wherein:
* Ar, L, R¹, R², R³ and X are as defined in any of claims 1 to 6, and
* R^{4a}, R^{4b}, R^{4c}, R^{4d}, R^{4e}, and R^{4f}, which may be identical or different, represent a hydrogen atom or a C₁-C₅ alkyl or cycloalkyl radical, it being possible for said C₁-C₅ alkyl or cycloalkyl radical to be substituted with one or more halogen atoms

10. Use according to claim 9, **characterised in that** R^{4a} and R^{4b} represent a methyl radical, and R^{4c}, R^{4d}, R^{4e}, and R^{4f} represent a hydrogen atom.

11. Use according to any one of the preceding claims, **characterised in that** the compound of the formula (I) is selected from the following compounds:
**[Table 3]**
| Name | Structural formula |
|---|---|
| Compound Ia1 | 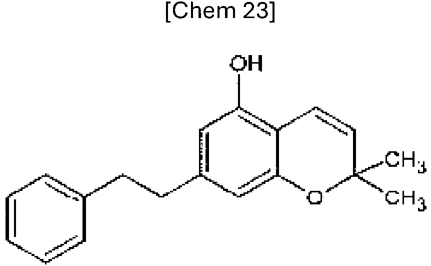 |
| Compound la2 | 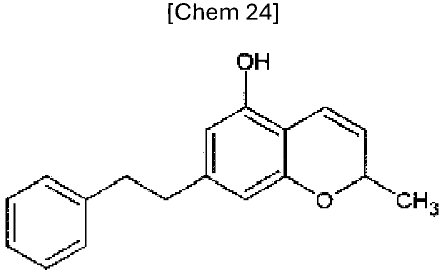 |
| Compound Ia3 | 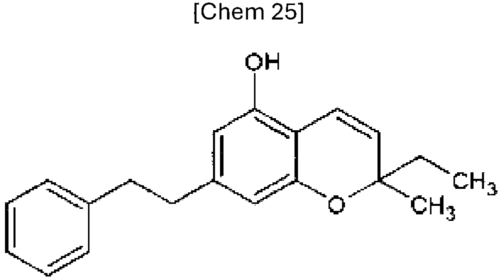 |
| Compound Ic1 | 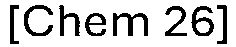 |
| | 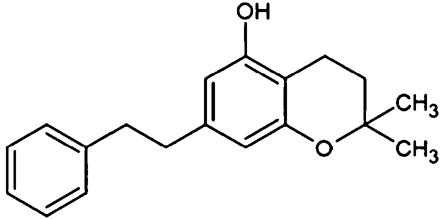 |

12. Phytotoxic composition, **characterised in that** it comprises, as herbicidal active substance, at least one compound as defined in any of claims 1 to 11, in combination with one or more formulation additives for improving water solubility and/or penetration into plant tissues.

13. Phytotoxic composition according to claim 12, **characterised in that** it further comprises one or more other active ingredients selected from fertilisers, growth regulators and additional herbicidal agents.

14. Method for controlling development and/or treating undesirable plants on the surface of a target zone comprising contacting the target zone with an effective amount of at least one compound as defined in any of claims 1 to 11 or of at least one phytotoxic composition as defined in claim 12 or 13.
